# FASCICULE DE BREVET EUROPEEN

(11) **EP 3 079 544 B1**
(45) Date de publication et mention de la délivrance du brevet: **31.01.2018**
(21) Numéro de dépôt: 14828197.5
(22) Date de dépôt: 05.12.2014
(51) Int. Cl.: A47J 43/044, A47J 43/046, A47J 43/06, A47J 43/07, A47J 44/00

(54) **APPAREIL ÉLECTROMÉNAGER DE PRÉPARATION CULINAIRE COMPORTANT UN BRAS INFÉRIEUR PORTÉ PAR UN SOCLE ET UN BRAS SUPÉRIEUR RELIÉ AU BRAS INFÉRIEUR PAR UN DISPOSITIF D'ARTICULATION**
HAUSHALTSGERÄT ZUR LEBENSMITTELZUBEREITUNG MIT EINEM UNTEREM ARM AN EINEM SOCKEL UND EINEM OBEREM ARM, DER ÜBER SCHARNIERE MIT DEM UNTEREN ARM VERBUNDEN IST
HOUSEHOLD FOOD PREPARATION APPLIANCE COMPRISING A LOWER ARM BORNE BY A BASE AND AN UPPER ARM CONNECTED TO THE LOWER ARM BY A HINGE MEANS

(30) Priorité: 13.12.2013 FR 1362620
(43) Date de publication de la demande: 19.10.2016
(73) Titulaire: SEB S.A., 69130 Ecully (FR)
(72) Inventeur: BLOND, Laurent, F-21200 Beaune (FR)
(74) Mandataire: Bourrières, Patrice
(86) Numéro de dépôt international: PCT/FR2014/053195
(87) Numéro de publication internationale: WO 2015/086967

(56) Documents cités:
- EP-A1- 0 156 506
- WO-A1-2012/097671
- WO-A1-2013/166693
- CN-U- 201 977 635
- DE-U1- 29 713 859
- DE-U1-202009 016 181
- GB-A- 995 612
- GB-A- 995 612
- US-A- 4 131 034

## Description

La présente invention se rapporte au domaine technique général des appareils électroménagers de préparation culinaire comprenant un socle destiné à reposer sur un plan de travail, un bras inférieur porté par le socle et un bras supérieur relié au bras inférieur par un dispositif d'articulation, le bras supérieur comportant au moins un entraîneur entraîné en rotation par un moteur et destiné à être accouplé à un accessoire pour le traitement des aliments, l'entraîneur débouchant sur une face inférieure du bras supérieur.

Il est connu, de la demande de brevet US 2 599 275, un appareil électroménager de préparation culinaire comprenant un socle destiné à reposer sur un plan de travail, l'appareil comportant également un bras inférieur relié au socle par une première liaison pivot et un bras supérieur relié au bras inférieur par une deuxième liaison pivot, le bras supérieur comportant deux entraîneurs, entraînés en rotation par un moteur, destinés à être accouplés à deux fouets.

Un tel appareil présente l'inconvénient de ne proposer qu'une seule position de travail et de comporter qu'un seul type d'outil, limitant ainsi le nombre de réalisations pouvant être réalisées avec cet appareil.

Il est connu de la demande de brevet GB995612, un appareil électroménager de préparation culinaire comportant un bras supérieur comprenant un entraineur entrainé en rotation par un moteur et destiné à être accouplé à un outil de travail, le bras supérieur étant relié à un bras inférieur par une liaison pivot, le bras supérieur pouvant occuper une position horizontale dans laquelle un outil de travail peut être accouplé directement à l'entraineur et une position verticale dans laquelle l'entraineur est utilisé pour entrainer un accessoire de traitement des aliments au travers d'un réducteur de vitesse.

Cependant, dans ce document, l'utilisateur est obligé de faire appel à un adaptateur pour pouvoir accoupler le réducteur de vitesse à l'entraineur lorsque le bras occupe la position verticale.

Aussi, un but de la présente invention est de proposer un appareil électroménager de préparation culinaire remédiant à ces inconvénients.

A cet effet, l'invention se rapporte à un appareil électroménager de préparation culinaire selon la revendication 1. Un tel appareil permet d'offrir une position de travail dans laquelle un accessoire peut être connecté sur l'entraîneur porté par le bras supérieur lorsque ce dernier occupe la position repliée, permettant de proposer une nouvelle ergonomie d'utilisation de l'appareil. Selon l'invention, le bras supérieur est superposé sur le bras inférieur lorsqu'il occupe la position repliée. Le bras supérieur et le bras inférieur présentant avantageusement la même largeur.

Selon une autre caractéristique de l'invention, le moteur est disposé dans un logement formant une excroissance sur la face inférieure du bras supérieur, le logement s'insérant au moins partiellement dans l'ouverture traversante lorsque le bras supérieur occupe la position repliée.

Une telle caractéristique permet de conserver un bras supérieur de faible épaisseur et de limiter l'encombrement de l'appareil lorsque les bras inférieur et supérieur de l'appareil sont repliés l'un sur l'autre.

De manière préférentielle, la profondeur de l'ouverture traversante du bras inférieur correspond sensiblement à la hauteur de la partie du logement formant une excroissance sur la face inférieure du bras supérieur.

Une telle caractéristique permet d'avoir un entraîneur venant sensiblement dans le plan de la face externe du bras inférieur lorsque le bras supérieur occupe la position repliée.

Selon encore une autre caractéristique de l'invention, l'appareil comporte un accessoire venant s'accoupler par l'intermédiaire d'un boitier, avantageusement d'un boîtier réducteur de vitesse, à l'entraîneur lorsque le bras supérieur occupe la position repliée. Selon l'invention, le bras inférieur et le bras supérieur peuvent occuper une position de travail verticale dans laquelle le bras inférieur est disposé sensiblement verticalement et le bras supérieur occupe la position repliée.

Une telle caractéristique permet à l'appareil d'occuper une position optimisée pour son fonctionnement avec un accessoire muni d'une goulotte pour l'introduction des aliments et d'une sortie rejetant directement les aliments traités dans une assiette disposée sur le socle. Selon l'invention, l'appareil comporte un boitier amovible comprenant un arbre d'entrée, venant s'accoupler sur l'entraîneur du bras supérieur, lorsque les bras inférieur et supérieur occupent la position de travail verticale, et comportant un arbre de sortie supportant un entraîneur secondaire destiné à être accouplé à un accessoire pour le traitement des aliments.

Un tel boitier permet de modifier la position de l'entraîneur, et notamment sa hauteur par rapport au socle, et peut comporter un train d'engrenages permettant d'augmenter ou de réduire la vitesse de rotation de l'entraîneur secondaire, par rapport à la vitesse de rotation de l'entraîneur du bras supérieur, afin de l'adapter à l'accessoire venant s'accoupler sur le boitier. Selon une autre caractéristique de l'invention, l'entraineur secondaire est situé plus haut que l'entraineur du bras supérieur lorsque le boitier amovible est accouplé sur l'entraineur du bras supérieur et que ce dernier est en position de travail verticale.

Selon une autre caractéristique de l'invention, le boitier est un boitier réducteur de vitesse.

Une telle caractéristique permet d'obtenir une faible vitesse de rotation au niveau de l'entraîneur secondaire, particulièrement adaptée pour l'utilisation d'un accessoire pour râper ou pour hacher les aliments.

Selon une autre caractéristique de l'invention, le boitier comporte un bord inférieur venant jouxter le socle lorsqu'il est accouplé à l'entraîneur.

Une telle caractéristique permet au boitier de reposer contre le socle afin que les efforts exercés verticalement sur le boitier, lors du fonctionnement de l'accessoire, soient supportés directement par le socle et ne soient pas transmis à la structure des bras supérieur et inférieur.

Selon une autre caractéristique de l'invention, le moteur est disposé dans le bras supérieur, de préférence transversalement à ce dernier.

Une telle caractéristique permet de disposer le moteur au plus près de l'entraîneur, évitant ainsi l'utilisation d'un dispositif coûteux de transmission de mouvement.

De manière préférentielle, l'épaisseur des bras inférieur et supérieur est dimensionnée de telle sorte que l'épaisseur totale des bras supérieur et inférieur en position repliée corresponde sensiblement à la longueur du moteur disposé en position transversale, pour une plus grande compacité de l'appareil en position repliée.

De manière préférentielle, le moteur est un moteur à courant continu.

Selon une autre caractéristique de l'invention, le socle comporte un plateau amovible sur lequel peut être disposé un récipient de travail, le plateau recouvrant une cavité munie de moyens de verrouillage d'un récipient de travail.

Une telle caractéristique présente l'avantage de permettre à la fois l'utilisation de l'appareil avec un récipient standard reposant directement sur le plateau amovible ou l'utilisation de l'appareil avec un récipient spécifique, muni de moyens coopérant avec les moyens de verrouillage de la cavité pour assurer l'immobilisation du récipient de travail sur le socle, une telle immobilisation étant particulièrement utile lorsque l'appareil est utilisé pour réaliser des préparations générant des contraintes nécessitant un maintien ferme du récipient de travail sur le socle, tel que le pétrissage des aliments.

Selon une autre caractéristique de l'invention, le bras supérieur comporte une poignée de préhension s'étendant au moins pour partie devant l'extrémité libre du bras supérieur.

Une telle caractéristique permet d'offrir une excellente ergonomie dans la manipulation du bras supérieur pour modifier l'agencement de l'appareil.

Selon une autre caractéristique de l'invention, le bras inférieur et le bras supérieur peuvent occuper une position de travail en équerre dans laquelle le bras inférieur est disposé sensiblement verticalement et le bras supérieur est disposé sensiblement perpendiculairement au bras inférieur.

Une telle caractéristique permet à l'appareil d'occuper une position optimisée pour son fonctionnement avec un accessoire, de type outil de pétrissage ou de malaxage, comprenant des outils venant plonger directement dans une cuve disposée sur le socle. Selon l'invention, le bras supérieur comporte ledit entraîneur débouchant sur une face inférieure du bras supérieur. Selon une autre caractéristique de l'invention, le bras supérieur comporte un second entraîneur débouchant sur une face supérieure du bras supérieur, ledit entraîneur étant entraîné par le moteur au travers d'un réducteur de vitesse, le second entraîneur étant en prise directe avec un arbre de sortie du moteur.

Une telle caractéristique permet d'avoir deux entraîneurs distincts dont la vitesse et l'emplacement sont optimisés pour fonctionner avec certains types d'accessoires pour obtenir à la fois de très bonnes performances et une très bonne ergonomie d'utilisation.

Selon une autre caractéristique de l'invention, le bras inférieur est relié au socle par un premier dispositif d'articulation et le bras supérieur est relié au bras inférieur par un deuxième dispositif d'articulation, les premier et deuxième dispositifs d'articulation comportant des moyens de verrouillage permettant d'immobiliser les bras inférieur et supérieur dans au moins une position prédéterminée.

Une telle caractéristique permet d'immobiliser les bras inférieur et supérieur de l'appareil dans des positions de travail prédéterminées.

Selon une autre caractéristique de l'invention, l'appareil peut occuper une position de travail horizontale dans laquelle le bras inférieur s'étend parallèlement au socle et le bras supérieur est replié sur le bras inférieur.

Une telle position de travail présente l'avantage d'être particulièrement adaptée pour l'utilisation de l'appareil avec un accessoire de type récipient de mixage connecté au second entraîneur du bras supérieur, la position repliée des bras le long du socle permettant d'abaisser la hauteur de l'appareil pour une plus grande stabilité et une meilleure accessibilité au récipient de mixage.

Selon une autre caractéristique de l'invention, le premier dispositif d'articulation permet une rotation du bras inférieur autour d'un axe Y, dit vertical, perpendiculaire au plan de travail, la rotation autour de l'axe Y s'effectuant sur un secteur angulaire supérieur ou égal à 180° et préférentiellement proche de 340°.

Une telle caractéristique présente l'avantage de permettre la rotation du bras inférieur sur 180° pour offrir une nouvelle position de travail à l'appareil.

Selon une autre caractéristique de l'invention, le premier dispositif d'articulation permet un mouvement de pivotement du bras inférieur sur le socle autour d'un axe X, dit horizontal, parallèle au plan de travail.

Selon une autre caractéristique de l'invention, le deuxième dispositif d'articulation permet un pivotement du bras supérieur sur le bras inférieur autour d'un axe X' parallèle à l'axe X.

Selon une autre caractéristique de l'invention, le moteur est alimenté électriquement par un cordon d'alimentation pénétrant dans l'appareil au niveau du socle et s'étendant à l'intérieur du bras inférieur et du bras supérieur, les bras inférieur et supérieur comportant une structure creuse.

Une telle caractéristique permet de limiter la gêne du cordon d'alimentation lors de la manipulation des bras supérieur et inférieur de l'appareil, le cordon ne venant pas s'enrouler autour des bras.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire selon un mode particulier de réalisation de l'invention ;
- la figure 2 est une vue en perspective de l'appareil de la figure 1 avec le premier dispositif d'articulation représenté partiellement éclaté ;
- la figure 3 est une vue de détail, en perspective partiellement éclatée, du premier dispositif d'articulation reliant le socle au bras inférieur ;
- les figures 4 et 5 sont des vues en perspective de l'appareil avec le deuxième dispositif d'articulation représenté partiellement éclaté ;
- la figure 6 est une vue en perspective, partiellement éclatée, d'une partie du système de verrouillage du deuxième dispositif d'articulation ;
- la figure 7 est une vue en coupe longitudinale de l'appareil dans une position de rangement ;
- la figure 8 est une vue de côté de l'appareil de la figure 1 avec le bras en position relevée ;
- la figure 9 est une vue en coupe longitudinale de l'appareil selon la ligne IX-IX de la figure 8 ;
- la figure 10 est une vue en perspective de l'appareil de la figure 1 dans une position de travail en équerre dans laquelle le bras supérieur est équipé de crochets de pétrissage, et d'une cuve fixée sur le socle ;
- la figure 11 est une vue en perspective partiellement éclatée de l'adaptateur assurant l'entraînement des crochets de pétrissage de la figure 10 ;
- la figure 12 est une en perspective de l'appareil de la figure 1 équipé d'un fouet, l'appareil étant représenté avec le bras supérieur en position relevée et le bras inférieur pivoté de l'ordre de 90° sur le socle ;
- la figure 13 est une vue en perspective de l'appareil de la figure 1 dans une position de travail verticale ;
- la figure 14 est une vue de l'appareil de la figure 1 dans la position de travail verticale et équipé d'un boitier réducteur de vitesse ;
- les figures 15 et 16 sont des vues en perspective de l'appareil de la figure 13 accouplé respectivement à un accessoire pour râper les aliments et à un accessoire hachoir ;
- la figure 17 est une vue en perspective partiellement éclatée du boitier réducteur de vitesse ;
- les figures 18 et 19 sont respectivement des vues en perspective et de côté de l'appareil dans une position de travail horizontale, cette position de travail correspondant également à la position de rangement ;
- la figure 20 est une vue en perspective de l'appareil dans la position de travail horizontale accouplé avec un bol de mixage.

Seuls les éléments nécessaires à la compréhension de l'invention ont été représentés. Pour faciliter la lecture des dessins, les mêmes éléments portent les mêmes références d'une figure à l'autre.

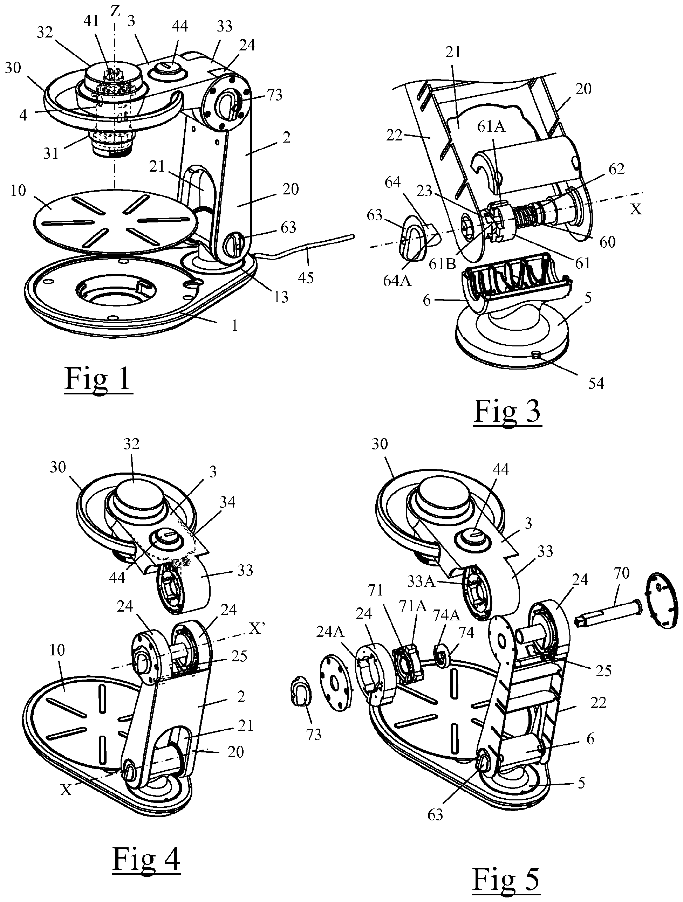

La figure 1 représente un appareil électroménager de préparation culinaire comprenant un socle 1 destiné à reposer à plat sur un plan de travail, le socle 1 comprenant un plateau 10 amovible, circulaire, muni d'un revêtement antidérapant, tel un revêtement silicone, sur lequel peut être disposé un récipient de travail.

Conformément à cette figure, l'appareil comporte un bras inférieur 2, sensiblement rectiligne, relié au socle 1 par un premier dispositif d'articulation et comprend un bras supérieur 3, sensiblement rectiligne, comprenant une extrémité arrière reliée au bras inférieur 2 par un deuxième dispositif d'articulation.

De manière préférentielle, le bras supérieur 3 comporte une extrémité avant, libre, entourée d'une poignée 30 de préhension en forme d'anse annulaire prenant naissance sur les bords latéraux du bras supérieur 3 et passant devant l'extrémité libre du bras supérieur 3 en s'étendant dans le plan du bras supérieur 3.

A titre d'exemple, le bras inférieur 2 présente une longueur de l'ordre de 32 cm et le bras supérieur 3 présente une longueur de l'ordre de 28 cm, la poignée 30 de préhension présentant un diamètre de l'ordre de 20 cm et étant positionnée sur le bras supérieur 3 de telle sorte que la longueur hors tout du bras supérieur 3 muni de la poignée 30 corresponde sensiblement à la longueur du bras inférieur 2.

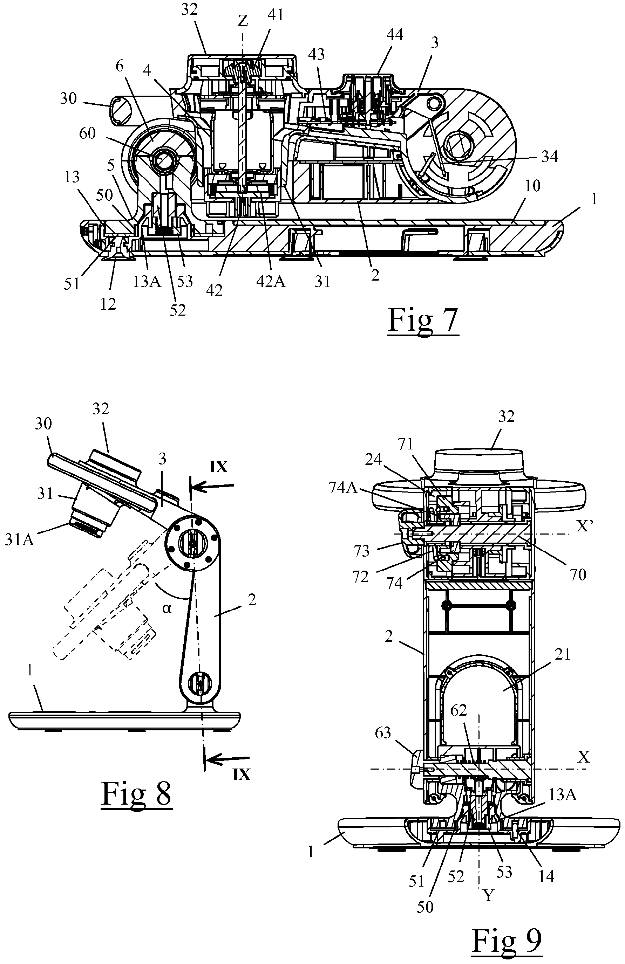

Conformément à la figure 7, le bras supérieur 3 comporte une structure creuse qui renferme, à proximité de son extrémité libre, un moteur 4 représenté en pointillé sur la figure 1, le moteur 4 s'étendant selon un axe Z transversal à l'axe longitudinal du bras supérieur 3 et étant disposé dans un logement 31 formant une excroissance sur une face inférieure du bras supérieur 3.

De manière préférentielle, le moteur 4 comporte un arbre de sortie comprenant une extrémité supérieure qui est reliée directement à un entraîneur 41 à haute vitesse débouchant sur une face supérieure du bras supérieur 3, cet entraîneur 41 étant masqué par un couvercle de protection 32 amovible, visible sur la figure 1. L'arbre de sortie du moteur 4 comprend également une extrémité inférieure reliée à un entraîneur 42 à vitesse réduite, visible notamment sur la figure 7, débouchant à l'extrémité inférieure du logement 31, cet entraîneur 42 tournant également autour de l'axe Z du moteur 4 et étant relié à l'arbre de sortie du moteur 4 par l'intermédiaire d'un réducteur de vitesse 42A, de type à train épicycloïdal.

A titre d'exemple, le moteur 4 est un moteur à courant continu, tel qu'un moteur de la série 900 commercialisé par la société Johnson, et sa vitesse de rotation nominale est de l'ordre de 11 000 tr/min, le réducteur de vitesse 42A étant dimensionné pour que la vitesse de l'entraîneur 42 soit de l'ordre de 1500 tr/min lorsque le moteur tourne à 11 000 tr/min.

Le moteur 4 est piloté, de manière connue en soi, par une carte de commande 43 de type carte à thyristors, visible sur la figure 7, disposée dans le bras supérieur 3, la carte de commande 43 étant reliée à un bouton de commande 44 disposé sur la face supérieure du bras supérieur 3, permettant de piloter le fonctionnement du moteur 4.

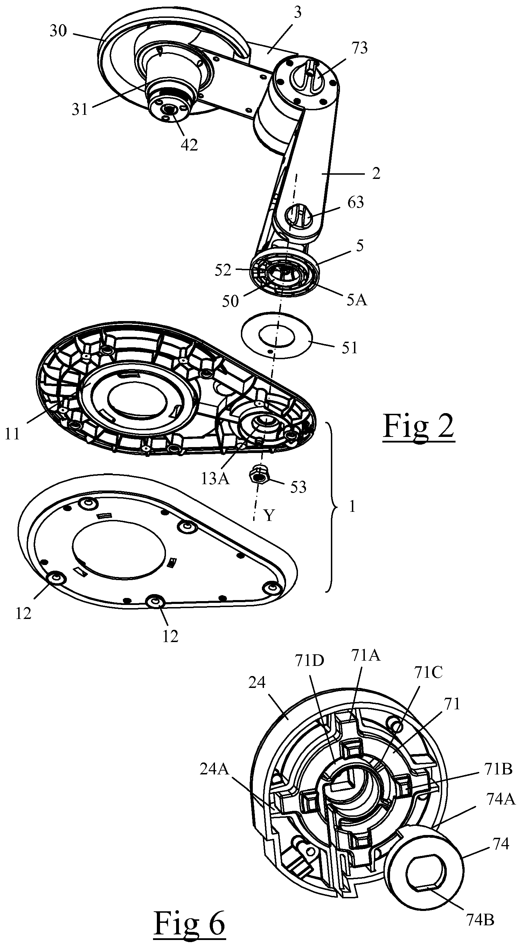

Comme on peut le voir sur la figure 2, le socle 1 comprend une face inférieure munie de plusieurs ventouses 12 permettant au socle 1 d'adhérer fermement au plan de travail et comporte un lest 11, avantageusement de l'ordre de 1 kg, assurant la stabilité à l'appareil quelque soit la position des bras supérieur 3 et inférieur 2.

Le premier dispositif d'articulation, reliant le socle 1 au bras inférieur 2, comporte une embase 5 circulaire montée rotative dans un logement 13 du socle autour d'un axe Y, dit vertical, s'étendant perpendiculairement au plan du socle 1, l'embase 5 comportant une bague de guidage 50 assurant le glissement entre l'embase 5 et un cône central 13A de guidage ménagé dans le fond du logement 13, une plaque de glissement 51 étant avantageusement interposée entre l'embase 5 et le socle 1.

L'embase 5 circulaire est rendue solidaire du socle 1 par une vis creuse 52, mieux visible sur la figure 9, sur laquelle vient s'engager un écrou 53 intégré dans le socle 1, la vis creuse 52 comportant un orifice central permettant le passage d'un cordon 45 d'alimentation du moteur 4, représenté uniquement sur la figure 1, pénétrant dans le socle 1 et s'étendant à l'intérieur du bras inférieur 2 et du bras supérieur 3 pour rejoindre la carte de commande 43 du moteur 4.

De manière préférentielle, des moyens butés, avantageusement constitués par un doigt 14 porté par le socle 1 et s'engageant dans une rainure 5A ménagée sur la face inférieure de l'embase 5 circulaire, limitent la rotation de l'embase 5 à un secteur angulaire de l'ordre de 340° afin de limiter les contraintes de torsion sur le cordon 45 d'alimentation.

Conformément aux figures 3 et 9, le bras inférieur 2 comporte une extrémité inférieure en forme de U comprenant deux branches 20 venant s'engager de part et d'autre d'un fût 6 cylindrique supporté par l'embase 5 en ménageant au dessus de ce fût 6 une ouverture traversante 21, le fût 6 renfermant un arbre 60 sur lequel une armature 22 métallique intégrée dans la structure creuse du bras inférieur 2 est montée pivotante permettant au bras inférieur 2 de tourner autour d'un axe X, dit horizontal, parallèle au plan du socle 1.

La rotation du bras inférieur 2 autour de l'arbre 60 est préférentiellement bloquée dans deux positions prédéterminées par un système de verrouillage comportant un crabot baladeur 61 qui est mobile en translation sur l'arbre 60, le crabot baladeur 61 étant bloqué en rotation dans le fût 6 cylindrique par l'engagement de nervures axiales portées par le fût 6 cylindrique, non visibles sur les figures, dans des rainures axiales 61A portées par le crabot baladeur 61.

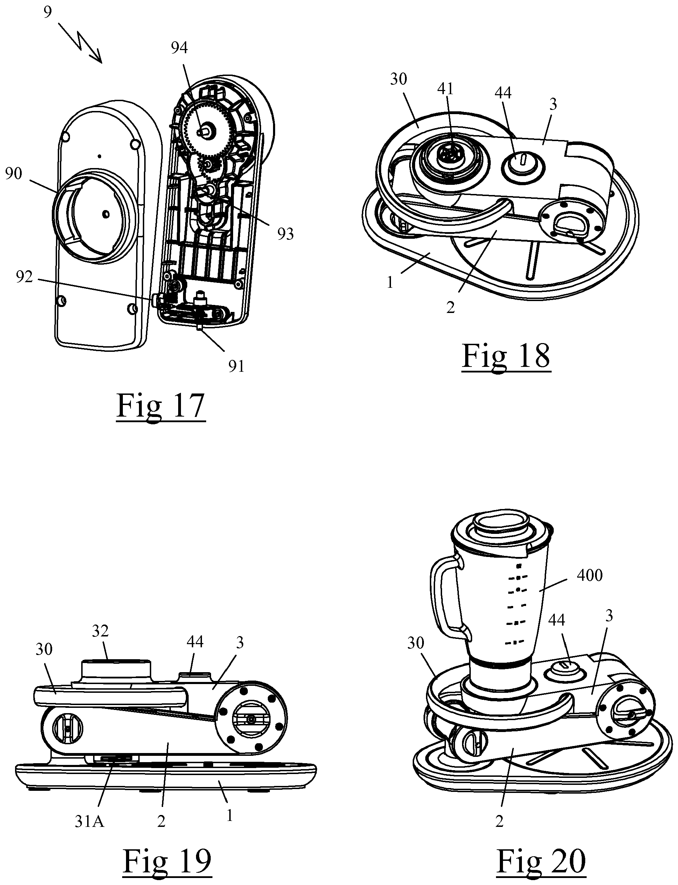

Le crabot baladeur 61 est ramené par un ressort de rappel 62 contre une bague 23 crantée solidaire de l'armature 22 du bras inférieur, la bague 23 comportant quatre crans répartis à 90° les uns de autres et adaptés pour recevoir quatre dents du crabot baladeur 61 lorsque le bras inférieur 2 occupe une position verticale, illustrée notamment sur les figures 1 et 8, dans laquelle il est disposé sensiblement perpendiculairement au plan du socle 1, et lorsqu'il occupe une position sensiblement horizontale, illustrée notamment sur les figures 18 et 19, dans laquelle le bras inférieur 2 s'étend le long du socle 1, l'engagement des dents du crabot baladeur 61 dans les crans de la bague 23 permettant d'immobiliser automatiquement le bras inférieur 2 dans ces deux positions.

Comme on peut le voir sur la figure 3, le système de verrouillage comporte un bouton 63 de déverrouillage disposé sur une face latérale du bras inférieur 2, à l'extrémité axiale de l'arbre 60, le bouton 63 de déverrouillage comprenant un manchon 64 s'engageant autour de l'arbre 60 et comprenant une extrémité biseautée formant une came d'actionnement 64A venant coopérer avec un chemin de came 61B de forme complémentaire porté par le crabot baladeur 61 pour repousser ce dernier à l'encontre du ressort de rappel 62 et faire sortir les dents du crabot baladeur 61 des crans de la bague 23 lorsque le bouton 63 est tourné de 90° dans un sens.

Conformément aux figures 4 et 5, le deuxième dispositif d'articulation reliant le bras inférieur 2 au bras supérieur 3 comporte un arbre 70 s'étendant parallèlement à l'arbre 60 du premier dispositif d'articulation, cet arbre 70 étant porté par deux supports 24 circulaires formés à l'extrémité supérieure du bras inférieur 2, ces deux supports 24 ménageant entre eux un espace dans lequel vient s'engager un tronçon 33 circulaire de forme complémentaire formé à l'extrémité postérieure du bras supérieur 3 pour réaliser une liaison de type charnière autorisant un pivotement du bras supérieur autour d'un axe X' parallèle à l'axe X.

De manière préférentielle, les deux supports 24 circulaires présentent un diamètre correspondant au double de l'épaisseur, en vue de profil, des bras inférieur 2 et supérieur 3 au niveau de leur jonction avec les supports 24 circulaires, le bras inférieur 2 présentant avantageusement une épaisseur se réduisant progressivement du premier dispositif d'articulation vers les supports 24 circulaires et le bras supérieur 3 présentant avantageusement une épaisseur se réduisant progressivement du deuxième dispositif d'articulation vers l'extrémité libre du bras supérieur 3 de sorte que, lorsque les bras supérieur 3 et inférieur 2 sont superposés, comme illustré sur la figure 19, ils forment un bloc compact présentant deux faces externes parallèles venant dans le prolongement du bord périphérique des supports 24 circulaires.

Le bras supérieur 3 comporte avantageusement un ressort de rappel 34, illustré en pointillé sur la figure 4, comportant une extrémité prenant appui sur une butée 25 portée par le bras inférieur 2 pour générer une force tendant à écarter le bras supérieur 3 du bras inférieur 2 lorsque le bras supérieur 3 est replié sur le bras inférieur 2, la butée 25 étant avantageusement positionnée de telle sorte que l'effort généré par le ressort de rappel 34 amène automatiquement le bras supérieur 3 dans une position de repos dans laquelle il fait un angle α de l'ordre de 45° par rapport au bras inférieur 2, tel qu'illustré en trait mixte sur la figure 8, l'utilisateur devant ensuite saisir manuellement le bras supérieur 3 pour ouvrir davantage l'angle a, l'extrémité du ressort de rappel 34 n'étant alors plus en contact avec la butée 25.

De manière préférentielle, le bras inférieur 2 comporte également une seconde butée, non visible sur les figures, contre laquelle l'extrémité du ressort de rappel 34 vient prendre appui lorsque l'ouverture du bras supérieur 3 atteint 115°, position illustrée en trait plein sur la figure 8, de manière à générer un effort venant freiner l'ouverture du bras supérieur 3, sans la bloquer, lorsque l'utilisateur exerce une traction vers le haut sur la poignée 30 pour ouvrir le bras supérieur 3 au-delà de l'ouverture à 115°.

Conformément à la figure 5, le deuxième dispositif d'articulation comporte un système de verrouillage du bras supérieur 3 agissant au niveau de l'un des supports 24 circulaires, ce système de verrouillage comportant un crabot baladeur 71 qui est mobile en translation sur l'arbre 70 et coulisse dans la pièce support 24 en étant bloqué en rotation dans cette dernière par l'engagement de quatre doigts radiaux 71A dans des rainures 24A adaptées de la pièce support 24.

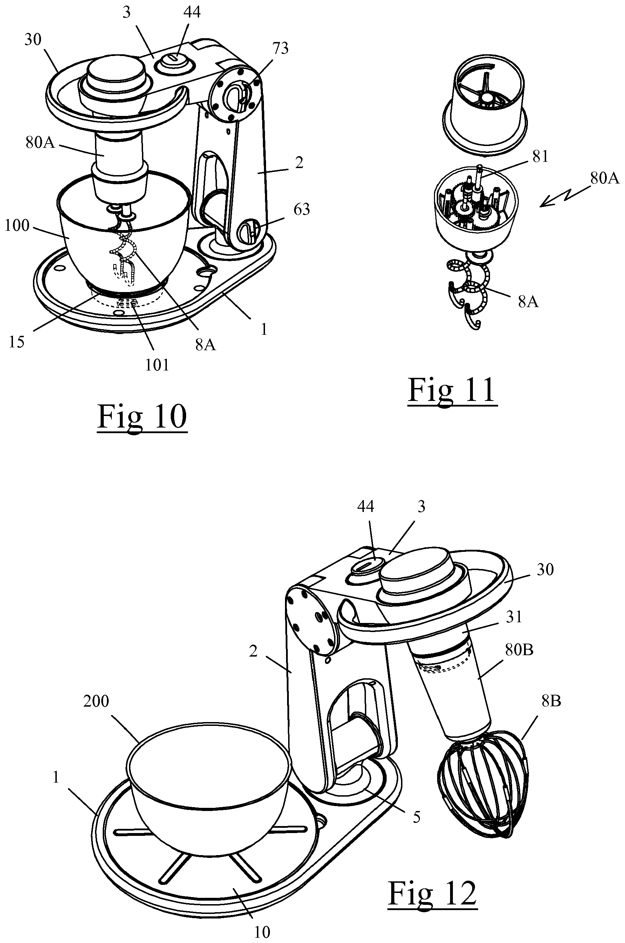

Le crabot baladeur 71 est amené par un ressort de rappel 72, visible uniquement sur la figure 9, contre une face latérale du tronçon 33 circulaire du bras supérieur 3, le crabot baladeur 71 comportant quatre ergots 71B, répartis à 90° les uns des autres, venant s'engager dans quatre empreintes 33A ménagées sur la face latérale du tronçon 33 pour assurer le blocage en rotation du bras supérieur 3 lorsque le bras supérieur 3 est disposé perpendiculairement au bras inférieur 2, ainsi que cela est illustré notamment sur les figures 1 et 10, et lorsque le bras supérieur s'étend le long du bras inférieur 2, ainsi que cela est illustré notamment sur les figures 18, 19 et 20.

Le système de verrouillage comporte un bouton 73 de déverrouillage disposé sur une face latérale du bras inférieur 2 et solidaire en rotation de l'arbre 70 en étant engagé sur une partie de section carrée disposée à l'extrémité axiale de l'arbre 70. Le système de déverrouillage comporte également une bague 74 de déverrouillage disposée sur l'arbre 70 entre le crabot baladeur 71 et le tronçon 33 circulaire du bras supérieur 3.

Conformément à la figure 6, cette bague 74 rendue solidaire en rotation de l'arbre 70 par des méplats 74B vient s'insérer dans une cavité ménagée au niveau de la périphérie interne du crabot baladeur 71 et comporte une came d'actionnement 74A venant coopérer avec un bord 71 C d'une lumière 71D ménagée dans le crabot baladeur 71 pour repousser ce dernier à l'encontre du ressort de rappel 72 lorsque le bouton 73 est tourné dans le sens horaire de manière à faire sortir les ergots 71B des empreintes 33A et permettre la libre rotation du bras supérieur 3.

Les premier et deuxième dispositifs d'articulation ainsi réalisés permettent d'immobiliser les bras inférieur 2 et supérieur 3 dans une première position de travail, dite en équerre, illustrée sur la figure 1, dans laquelle le bras inférieur 2 est disposé sensiblement perpendiculairement au socle 1 et le bras supérieur 3 s'étend au dessus du socle 1 en étant disposé sensiblement parallèlement à ce dernier.

Une telle position de travail est particulièrement adaptée pour l'utilisation de l'appareil avec un accessoire pour malaxer les aliments ou avec un accessoire pour émulsionner une préparation disposée dans une cuve reposant sur le socle 1.

Ainsi, la figure 10 illustre l'utilisation de l'appareil accouplé avec un accessoire de pétrissage comportant deux crochets 8A de pétrissage pour la réalisation de pâte. Lors de l'utilisation des crochets 8A de pétrissage, le plateau 10 amovible est préférentiellement retiré du socle 1 et une cuve 100 dédiée à la fonction pétrissage est disposée sur le socle 1.

Cette cuve 100 comporte une embase cylindrique venant s'engager dans une cavité 15 adaptée, ménagée dans le socle 1 sous le plateau 10 amovible, l'embase cylindrique comportant des ergots de verrouillage 101 venant coopérer avec des nervures, non visibles, ménagées en bordure de la cavité 15 pour réaliser une liaison de type baïonnette et assurer l'immobilisation de la cuve 100 sur le socle 1.

Les crochets 8A de pétrissage sont entraînés au travers d'un adaptateur 80A venant s'engager sur un manchon d'accouplement 31A entourant l'entraîneur 42 à vitesse réduite, la hauteur des crochets 8A et de l'adaptateur 80A étant adaptée pour que l'extrémité inférieure des crochets 8A parvienne à proximité immédiate du fond de la cuve 100 lorsque les bras inférieure 2 et supérieur 3 de l'appareil occupent la position de travail en équerre.

L'adaptateur 80A, illustré isolément sur la figure 11, referme un arbre 81 venant s'accoupler avec l'entraîneur 42 et un train d'engrenages permettant d'entraîner les deux crochets 8A en sens contraire à une vitesse de l'ordre de 200 à 250 tr/min lors de la rotation de l'entraîneur 42 à une vitesse de l'ordre de 1500 tr/min.

Lorsque l'utilisateur a terminé sa préparation, il arrête le moteur 4 à l'aide du bouton de commande 44, puis déverrouille d'une main le bras supérieur 3 en faisant tourner le bouton 73 et saisit la poignée 30 pour relever le bras supérieur 3 de manière à sortir les crochets 8A de pétrissage de la cuve 100 et à faire pivoter les bras inférieur 2 et supérieur 3 autour de l'axe vertical Y du premier dispositif d'articulation de manière à dégager l'accès à la cuve 100.

Un tel mouvement des bras inférieur 2 et supérieur 3 pour dégager l'accès au socle 1 est par exemple illustré sur la figure 12, où l'appareil est accouplé à un accessoire pour la réalisation d'émulsion comportant un fouet 8B à brins flexibles, tel que décrit dans la demande de brevet FR 2 971 689 déposée par la demanderesse.

Dans cette configuration de l'appareil, le fouet 8B est entraîné directement à la vitesse de l'entraîneur 42 à vitesse réduite et comporte une douille 80B venant s'accoupler au manchon d'accouplement 31A entourant l'entraîneur 42.

Ce fouet 8B est préférentiellement utilisé avec un récipient 200, de type saladier, qui est posé librement sur le plateau 10, ce dernier étant rapporté sur le socle 1 pour masquer la cavité 15, le revêtement antidérapant du plateau 10 assurant une stabilisation du récipient 200 sur le socle 1.

La longueur de la douille 80B est dimensionnée de telle sorte que l'extrémité inférieure des brins souples du fouet 8B vienne toucher le fond du récipient 200 disposé sur le socle 1 lorsque les bras supérieur 3 et inférieur 2 occupent la position de travail en équerre, l'utilisateur pouvant toujours, si nécessaire, déplacer manuellement le récipient 200 pour amener le fouet 8B dans les éventuelles zones du récipient 200 où l'émulsion des ingrédients n'est pas correctement réalisée.

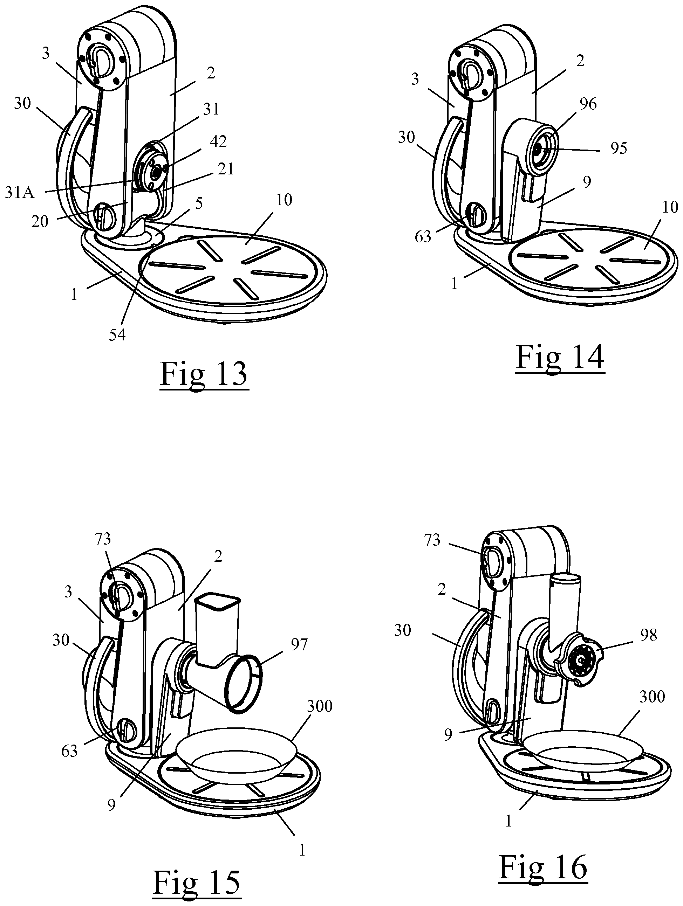

La figure 13 illustre l'appareil dans une deuxième position de travail, dite verticale, dans laquelle le bras inférieur 2 est disposé verticalement et l'embase 5 circulaire est tournée de 180° autour de son axe vertical Y, le bras supérieur 3 étant replié le long du bras inférieur 2 de manière à former un angle α nul avec ce dernier.

Dans cette position de travail verticale, le logement 31 renfermant le moteur 4 est engagé dans l'ouverture traversante 21 ménagée entre les branches 20 du bras inférieur 2 et l'entraîneur 42 à vitesse réduite débouche vers le plateau 10 du socle 1.

Comme cela est illustré sur la figure 14, cette position de travail verticale permet l'accouplement d'un boitier 9 réducteur de vitesse à l'entraîneur 42 du bras supérieur 3, ce boitier 9, illustré isolément sur la figure 17, comportant une bague 90 qui vient s'accoupler par rotation d'un quart de tour sur le manchon d'accouplement 31A entourant l'entraîneur 42 pour occuper une position verticale dans laquelle le bord inférieur du boitier 9 vient jouxter le socle 1.

De manière avantageuse, le bord inférieur du boitier 9 comprend un doigt de verrouillage 91 venant s'insérer automatiquement dans un orifice 54, visible sur la figure 13, ménagé dans l'embase 5 circulaire pour verrouiller le boitier 9 en position, un bouton de déverrouillage 92 étant prévu sur le boitier 9 pour ramener le doigt de verrouillage 91 vers l'intérieur du boitier 9 et permettre le désaccouplement du boitier 9 réducteur de vitesse.

Comme on peut le voir sur la figure 17, le boitier 9 comporte un arbre d'entrée 93 venant s'accoupler avec l'entraîneur 42 et un arbre de sortie 94 supportant un entraîneur basse vitesse 95, visible sur la figure 14, relié à l'arbre d'entrée 93 par un train d'engrenages permettant d'abaisser la vitesse de rotation de l'arbre de sortie 94 à 200 tr/min lorsque l'arbre d'entrée 93 tourne à 1500 tr/min.

Conformément aux figures 14 à 16, le boitier 9 réducteur de vitesse comporte une douille d'accouplement 96 autour de l'entraîneur basse vitesse 95 sur lequel peut être connecté par une liaison, de type quart de tour, un accessoire 97, 98 muni d'une goulotte pour l'introduction des aliments, de type tête pour râper les aliments 97 ou tête hachoir 98, une assiette 300 pouvant être disposée sur le plateau 10 du socle 1 pour recevoir les aliments issus directement de l'accessoire 97, 98.

Une telle disposition des bras inférieur 2 et supérieur 3 dans la position de travail verticale permet donc la réalisation des fonctions hacher ou râper avec une très bonne ergonomie d'utilisation, la goulotte d'introduction des aliments présentant l'avantage de rester à une hauteur relativement faible par rapport au socle 1 permettant à l'utilisateur d'avoir une bonne vision sur l'intérieur de la goulotte et de pouvoir exercer sans difficulté une pression sur les aliments présents dans la goulotte. De plus, dans cette position de travail verticale, le boitier 9 réducteur de vitesse présente l'avantage d'être en appui sur le socle 1 ce qui permet de ne pas exercer d'efforts importants sur les bras inférieur 2 et supérieur 3 lorsque l'utilisateur exerce une pression sur l'aliment disposé dans la goulotte.

Conformément aux figures 18 et 19, l'appareil peut également occuper une troisième position de travail, dite horizontale, dans laquelle le bras inférieur 2 s'étend parallèlement au socle 1 et le bras supérieur 3 est replié sur bras inférieur 2 de telle sorte que l'entraîneur 41 à haute vitesse soit disposé au sommet de l'appareil.

Dans cette position de l'appareil, un récipient de mixage 400 peut être accouplé sur le sommet du bras supérieur 3, ainsi que cela est illustré sur la figure 20, le récipient de mixage 400 renfermant un outil rotatif venant s'accoupler directement à l'entraîneur 41 pour être entraîné à haute vitesse. Lors de cette utilisation de l'appareil avec le récipient de mixage 400, la position repliée des bras supérieur 3 et inférieur 2 le long du socle 1 présente l'avantage de permettre l'obtention d'un appareil de faible hauteur, de l'ordre de 15 cm entre la face inférieur du socle 1 et la face supérieur du bras supérieur 3, de sorte que le sommet du récipient de mixage 400 reste facilement accessible et son contenu reste dans le champ visuel de l'utilisateur pour une plus grande ergonomie d'utilisation.

Cette position de travail horizontale présente également l'avantage de correspondre à une position de rangement de l'appareil dans laquelle l'encombrement de l'appareil est minimisé et présente une grande compacité lui permettant par exemple d'être disposé dans un tiroir.

L'appareil multifonctions ainsi réalisé présente donc l'avantage de procurer une très bonne ergonomie d'utilisation, les dispositifs d'articulation des bras inférieur et supérieur permettant aux bras de l'appareil d'occuper une position de travail adaptée et optimisée en fonction de l'accessoire utilisé.

En particulier, la présence d'une ouverture traversante dans le bras inférieur, pour accéder à l'entraîneur du bras supérieur lorsque le bras supérieur occupe une position repliée le long du bras inférieur, permet l'accouplement d'un tel entraîneur avec un accessoire dans une position procurant une nouvelle ergonomie d'utilisation, particulièrement avantageuse pour l'utilisation de certains accessoires.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, l'appareil pourra comporter des dispositifs de sécurité interdisant le fonctionnement du moteur lorsque les bras inférieur et supérieur n'occupent pas l'une des positions de travail de l'appareil.

Ainsi, dans une autre variante de réalisation, les systèmes de verrouillage des bras inférieur et supérieur pourront assurer l'immobilisation des bras inférieur et supérieur dans davantage de positions.

## Revendications

1. Appareil électroménager de préparation culinaire comportant un socle (1) destiné à reposer sur un plan de travail, un bras inférieur (2) porté par le socle (1) et un bras supérieur (3) comportant une extrémité arrière reliée au bras inférieur (2) par un dispositif d'articulation, le bras supérieur (3) comportant au moins un entraîneur (42) entraîné en rotation par un moteur (4) et destiné à être accouplé à un accessoire pour le traitement des aliments, l'entraîneur (42) débouchant sur une face inférieure du bras supérieur (3), le bras inférieur (2) et le bras supérieur (3) pouvant occuper une position de travail verticale dans laquelle le bras inférieur (2) est disposé sensiblement verticalement et le bras supérieur (3) occupe une position repliée, dans laquelle il s'étend le long du bras inférieur (2) avec la face inférieure du bras supérieur (3) disposée en regard du bras inférieur (2), **caractérisé en ce que** le bras inférieur (2) comporte une ouverture traversante (21) permettant d'accéder à l'entraîneur (42) lorsque le bras supérieur (3) occupe la position repliée et **en ce que** l'appareil comporte un boitier (9) amovible comprenant un arbre d'entrée (93), venant s'accoupler sur l'entraîneur (42) du bras supérieur (3), lorsque les bras inférieur (2) et supérieur (3) occupent la position de travail verticale, et comportant un arbre de sortie (94) supportant un entraîneur (95) secondaire destiné à être accouplé à un accessoire (97, 98) pour le traitement des aliments.

2. Appareil électroménager de préparation culinaire selon la revendication 1, **caractérisé en ce que** le moteur (4) est disposé dans un logement (31) formant une excroissance sur la face inférieure du bras supérieur (3), ledit logement (31) s'insérant au moins partiellement dans l'ouverture traversante lorsque le bras supérieur (3) occupe la position repliée.

3. Appareil électroménager de préparation culinaire selon l'une quelconque des revendications 1 à 2, **caractérisé en ce qu'**il comporte un accessoire (97, 98) venant s'accoupler par l'intermédiaire du boitier (9), à l'entraîneur (42) lorsque le bras supérieur (3) occupe la position repliée.

4. Appareil électroménager de préparation culinaire selon l'une quelconque des revendications 1 à 3, caractérisé en en ce que le boitier (9) est un boitier réducteur de vitesse.

5. Appareil électroménager de préparation culinaire selon l'une quelconque des revendications 1 à 4, **caractérisé en ce que** le boitier (9) comporte un bord inférieur venant jouxter le socle (1) lorsqu'il est accouplé à l'entraîneur (42).

6. Appareil électroménager de préparation culinaire selon l'une quelconque des revendications 1 à 5, **caractérisé en ce que** le socle (1) comporte un plateau (10) amovible sur lequel peut être disposé un récipient de travail (200, 300), ledit plateau (10) recouvrant une cavité (15) munie de moyens de verrouillage d'un récipient de travail (100).

7. Appareil électroménager de préparation culinaire selon l'une quelconque des revendications 1 à 6, **caractérisé en ce que** le bras supérieur (3) comporte une poignée (30) de préhension s'étendant au moins pour partie devant l'extrémité libre du bras supérieur (3).

8. Appareil électroménager de préparation culinaire selon l'une quelconque des revendications 1 à 7, **caractérisé en ce que** le bras inférieur (2) et le bras supérieur (3) peuvent occuper une position de travail en équerre dans laquelle le bras inférieur (2) est disposé sensiblement verticalement et le bras supérieur (3) est disposé sensiblement perpendiculairement au bras inférieur (2).

9. Appareil électroménager de préparation culinaire selon l'une quelconque des revendications 1 à 8, **caractérisé en ce que** le bras supérieur (3) comporte l'entraîneur (42) débouchant sur une face inférieure du bras supérieur (3) et un second entraîneur (41) débouchant sur une face supérieure du bras supérieur (3), l'entraîneur (42) étant entraîné par le moteur (4) au travers d'un réducteur de vitesse, le second entraîneur (41) étant en prise directe avec un arbre de sortie du moteur (4).

10. Appareil électroménager de préparation culinaire selon l'une quelconque des revendications 1 à 9, **caractérisé en ce que** le bras inférieur (2) est relié au socle par un premier dispositif d'articulation et le bras supérieur (3) est relié au bras inférieur (2) par un deuxième dispositif d'articulation, les premier et deuxième dispositifs d'articulation comportant des moyens de verrouillage permettant d'immobiliser les bras inférieur (2) et supérieur (3) dans au moins une position prédéterminée.

11. Appareil électroménager de préparation culinaire selon la revendication 10, **caractérisé en ce qu'**il peut occuper une position de travail horizontale dans laquelle le bras inférieur (2) s'étend parallèlement au socle (1) et le bras supérieur (3) est replié sur le bras inférieur (2).

12. Appareil électroménager de préparation culinaire selon l'une quelconque des revendications 10 à 11, **caractérisé en ce que** le premier dispositif d'articulation permet une rotation du bras inférieur (2) autour d'un axe Y, dit vertical, perpendiculaire au plan de travail, la rotation autour de l'axe Y s'effectuant sur un secteur angulaire supérieur ou égal à 180° et préférentiellement proche de 340°.

13. Appareil électroménager de préparation culinaire selon l'une quelconque des revendications 1 à 12, **caractérisé en ce que** le moteur (4) est alimenté électriquement par un cordon (45) d'alimentation pénétrant dans l'appareil au niveau du socle (1) et s'étendant à l'intérieur du bras inférieur (2) et du bras supérieur (3), les bras inférieur (2) et supérieur (3) comportant une structure creuse.

## Patentansprüche

1. Elektrohaushaltsgerät zur Nahrungszubereitung, das einen Sockel (1), der dazu bestimmt ist, auf einer Arbeitsebene zu ruhen, einen unteren Arm (2), der von dem Sockel (1) getragen wird, und einen oberen Arm (3) aufweist, der ein hinteres Ende aufweist, das mit dem unteren Arm (2) durch eine Gelenkeinrichtung verbunden ist, wobei der obere Arm (3) mindestens einen Treiber (42) aufweist, der von einem Motor (4) in Rotation angetrieben wird und dazu bestimmt ist, mit einem Zubehörteil zur Nahrungszubereitung gekoppelt zu werden, wobei der Treiber (42) auf einer untern Seite des oberen Arms (3) mündet, wobei der untere Arm (2) und der obere Arm (3) eine vertikale Arbeitsposition einnehmen können, in der der untere Arm (2) im Wesentlichen vertikal angeordnet ist und der obere Arm (3) eine zusammengeklappte Position einnimmt, in der er sich entlang des unteren Armes (2) erstreckt, wobei die untere Seite des oberen Arms (3) zu dem unteren Arm (2) gewandt angeordnet ist,
**dadurch gekennzeichnet, dass** der untere Arm (2) eine durchgehende Öffnung (21) aufweist, die es ermöglicht, auf den Treiber (42) zuzugreifen, während der oberer Arm (3) die zusammengeklappte Position einnimmt, und dadurch dass das Gerät einen abnehmbaren Kasten (9) aufweist, der eine Eingangswelle (93) umfasst, die mit dem Treiber (42) des oberen Arms (3) gekoppelt ist, wenn der untere (2) und obere (3) Arm die vertikale Arbeitsposition einnehmen, und eine Ausgangswelle (94) umfasst, die einen sekundärem Treiber (95) trägt, der dazu bestimmt ist, mit einem Zubehörteil (97, 98) zur Nahrungszubereitung gekoppelt zu werden.

2. Elektrohaushaltsgerät zur Nahrungszubereitung nach Anspruch 1, **dadurch gekennzeichnet, dass** der Motor (4) in einem Gehäuse (31) angeordnet ist, das einen Auswuchs auf der unteren Seite des oberen Armes (3) bildet, wobei das Gehäuse (31) mindestens teilweise in eine durchgehende Öffnung eingepasst ist, wenn der obere Arm (3) die zusammengeklappte Position einnimmt.

3. Elektrohaushaltsgerät zur Nahrungszubereitung nach einem der Ansprüche 1 bis 2, **dadurch gekennzeichnet, dass** es ein Zubehörteil (97, 98) umfasst, das mittels des Kastens (9) an den Treiber (42) angekoppelt ist, wenn der obere Arm (3) die zusammengeklappte Position einnimmt.

4. Elektrohaushaltsgerät zur Nahrungszubereitung nach einem der Ansprüche 1 bis 3, **dadurch gekennzeichnet, dass** der Kasten (9) ein Untersetzungsgetriebe ist.

5. Elektrohaushaltsgerät zur Nahrungszubereitung nach einem der Ansprüche 1 bis 4, **dadurch gekennzeichnet, dass** der Kasten (9) eine untere Kante aufweist, die an den Sockel (1) angrenzt, wenn er mit dem Treiber (42) gekoppelt ist.

6. Elektrohaushaltsgerät zur Nahrungszubereitung nach einem der Ansprüche 1 bis 5, **dadurch gekennzeichnet, dass** der Sockel (1) eine abnehmbare Platte (10) aufweist, auf der ein Arbeitsbehälter (200, 300) angeordnet werden kann, wobei die Platte (10) einen Hohlraum (15) abdeckt, der mit Mitteln zum Verriegeln des Arbeitsbehälters (100) versehen ist.

7. Elektrohaushaltsgerät zur Nahrungszubereitung nach einem der Ansprüche 1 bis 6, **dadurch gekennzeichnet, dass** der obere Arm (3) einen Griff (30) zum Ergreifen aufweist, der sich zumindest teilweise vor dem freien Ende des oberen Arms (3) erstreckt.

8. Elektrohaushaltsgerät zur Nahrungszubereitung nach einem der Ansprüche 1 bis 7, **dadurch gekennzeichnet, dass** der untere Arm (2) und der obere Arm (3) eine Arbeitsposition im rechten Winkel einnehmen können, in welcher der untere Arm (2) im Wesentlichen vertikal angeordnet ist und der obere Arm (3) im Wesentlichen senkrecht zu dem unteren Arm (2) angeordnet ist.

9. Elektrohaushaltsgerät zur Nahrungszubereitung nach einem der Ansprüche 1 bis 8, **dadurch gekennzeichnet, dass** der obere Arm (3) den Treiber (42), der auf einer unteren Seite des oberen Armes (3) mündet, und einen zweiten Treiber (41) aufweist, der auf einer oberen Seite des oberen Arms (3) mündet, wobei der Treiber (42) durch den Motor (4) über einen Drehzahlminderer angetrieben wird, wobei der zweite Treiber (41) im direkten Eingriff mit einer Ausgangswelle des Motors (4) ist.

10. Elektrohaushaltsgerät zur Nahrungszubereitung nach einem der Ansprüche 1 bis 9, **dadurch gekennzeichnet, dass** der untere Arm (2) mit dem Sockel durch eine erste Gelenkeinrichtung verbunden ist, und dass der obere Arm (3) mit dem unteren Arm (2) durch eine zweite Gelenkeinrichtung verbunden ist, wobei die erste und zweite Gelenkeinrichtung Mittel zur Verriegelung aufweisen, die es ermöglichen, den unteren (2) und den oberen (3) Arm in mindestens einer vorgegebenen Position zu immobilisieren.

11. Elektrohaushaltsgerät zur Nahrungszubereitung nach Anspruch 10, **dadurch gekennzeichnet, dass** es eine horizontale Arbeitsposition einnehmen kann, in der sich der untere Arm (2) parallel zu dem Sockel (1) erstreckt und der obere Arm (3) auf den unteren Arm (2) zusammengeklappt ist.

12. Elektrohaushaltsgerät zur Nahrungszubereitung nach einem der Ansprüche 10 bis 11, **dadurch gekennzeichnet, dass** die erste Gelenkvorrichtung eine Drehung des unteren Armes (2) um eine Y-Achse, die so genannte vertikale, senkrecht zu der Arbeitsebene ermöglicht, wobei die Drehung um die Achse Y auf einem Winkelsektor, der größer als oder gleich 180° und vorzugsweise nahe 340° ist, erfolgt.

13. Elektrohaushaltsgerät zur Nahrungszubereitung nach einem der Ansprüche 1 bis 12, **dadurch gekennzeichnet, dass** der Motor (4) elektrisch durch ein Versorgungskabel (45) versorgt wird, das in das Gerät bei dem Sockel (1) eindringt, und sich innerhalb des unteren Arms (2) und des oberen Arms (3) erstreckt, wobei der untere (2) und obere (3) Arm eine Hohlstruktur aufweisen.

## Claims

1. Household food preparation appliance comprising a base (1) intended to rest on a work surface, a lower arm (2) borne by the base (1) and an upper arm (3) comprising a rear end connected to the lower arm (2) by a hinge means, the upper arm (3) comprising at least one driver (42) rotated by a motor (4) and intended to be coupled with an accessory to process food, the driver (42) leading to a lower face of the upper arm (3), the lower arm (2) and the upper arm (3) being able to occupy a vertical working position wherein the lower arm (2) is arranged substantially vertically and the upper arm (3) occupies a folded position, wherein it extends along the lower arm (2) with the lower face of the upper arm (3) arranged opposite the lower arm (2), **characterised in that** the lower arm (2) comprises a transversal opening (21) enabling to access the driver (42) when the upper arm (3) occupies the folded position and **in that** the appliance comprises a removable casing (9) comprising an input shaft (93), coupling with the driver (42) of the upper arm (3), when the lower arm (2) and upper arm (3) occupy the vertical working position, and comprising an output shaft (94) supporting a secondary driver (95) intended to be coupled with an accessory (97, 98) for processing food.

2. Household food preparation appliance according to claim 1, **characterised in that** the motor (4) is arranged in a housing (31) forming a protrusion over the lower face of the upper arm (3), said housing (31) being inserted at least partially into the transversal opening when the upper arm (3) occupies the folded position.

3. Household food preparation appliance according to any one of the claims 1 to 2, **characterised in that** it comprises an accessory (97, 98) being coupled by the intermediary of the casing (9) to the driver (42) when the upper arm (3) occupies the folded position.

4. Household food preparation appliance according to any one of the claims 1 to 3, **characterised in that** the casing (9) is a speed-reducing casing.

5. Household food preparation appliance according to any one of the claims 1 to 4, **characterised in that** the casing (9) comprises a lower edge abutting the base (1) when it is coupled with the driver (42).

6. Household food preparation appliance according to any one of the claims 1 to 5, **characterised in that** the base (1) comprises a removable plate (10) whereon a work container (200, 300) can be arranged, said plate (10) covering a cavity (15) equipped with means for locking a work container (100).

7. Household food preparation appliance according to any one of the claims 1 to 6, **characterised in that** the upper arm (3) comprises a gripping handle (30) extending at least in part in front of the free end of the upper arm (3).

8. Household food preparation appliance according to any one of the claims 1 to 7, **characterised in that** the lower arm (2) and the upper arm (3) can occupy a square working position wherein the lower arm (2) is arranged substantially vertically and the upper arm (3) is arranged substantially perpendicularly to the lower arm (2).

9. Household food preparation appliance according to any one of the claims 1 to 8, **characterised in that** the upper arm (3) comprises the driver (42) leading to a lower face of the upper arm (3) and a second driver (41) leading to an upper face of the upper arm (3), the driver (42) being driven by the motor (4) through a speed reducer, the second driver (41) being in direct contact with an output shaft of the motor (4).

10. Household food preparation appliance according to any one of the claims 1 to 9, **characterised in that** the lower arm (2) is connected to the base by a first hinge means and the upper arm (3) is connected to the lower arm (2) by a second hinge means, the first and second hinge means comprising locking means enabling the lower arm (2) and upper arm (3) to be immobilised in at least one predetermined position.

11. Household food preparation appliance according to claim 10, **characterised in that** it can occupy a horizontal working position wherein the lower arm (2) extends parallel to the base (1) and the upper arm (3) is folded over the lower arm (2).

12. Household food preparation appliance according to any one of the claims 10 to 11, **characterised in that** the first hinge means enables a rotation of the lower arm (2) around a Y-axis, known as vertical, perpendicular to the work surface, the rotation around the Y-axis being made over an angular sector of more than or equal to 180° and preferably close to 340°.

13. Household food preparation appliance according to any one of the claims 1 to 12, **characterised in that** the motor (4) is supplied electrically by a power cord (45) entering the appliance at the level of the base (1) and extending inside the lower arm (2) and upper arm (3), the lower arm (2) and upper arm (3) comprising a hollow structure.
